Europäisches Patentamt

European Patent Office

Office européen des brevets

(19)

(11) Publication number: **0 068 836**
**A1**

(12) # EUROPEAN PATENT APPLICATION

(21) Application number: **82303316.2**

(22) Date of filing: **25.06.82**

(51) Int. Cl.³: **H 01 M 2/12**

(30) Priority: **29.06.81 US 278901**

(43) Date of publication of application: **05.01.83**
**Bulletin 83/1**

(84) Designated Contracting States: **CH DE FR GB LI**

(71) Applicant: **UNION CARBIDE CORPORATION, Old Ridgebury Road, Danbury Connecticut 06817 (US)**

(72) Inventor: **Peterson, Gordon Edward, 14317 Birchwood Avenue, Cleveland Ohio 44111 (US)**

(74) Representative: **McCall, John Douglas et al, W.P. THOMPSON & CO. Coopers Building Church Street, Liverpool L1 3AB (GB)**

(54) **Non-resealable safety vent for electrochemical cells.**

(57) An electrochemical cell in which the active components of the cell are assembled within a housing comprising a container sealed at its open end by a cover and having at least one vent orifice in the housing, a flexible sheet disposed over the vent orifice and secured and sealed to the housing of the cell completely around the vent orifice, and a selected area within the segment of the sheet secured to the housing of the cell is spaced from the vent orifice and is secured to the housing of the cell such that fluid pressure transmitted through the vent orifice from within the cell will exert force against the flexible sheet where it will be substantially concentrated about the secured area until a predetermined pressure level is reached that will tear the sheet about the secured area, producing a permanent vent in the cell.

1.

<u>DESCRIPTION</u>

<u>"NON-RESEALABLE SAFETY VENT FOR ELECTROCHEMICAL CELLS"</u>

This invention relates to a non-resealable safety vent for galvanic cells, such as non-aqueous cells, which comprises the employment of a flexible sheet disposed over an orifice in the housing of the cell and secured proximal its peripheral edge to the housing of the cell and having a selected area of the flexible sheet that is spaced from the orifice secured to the housing of the cell, for example by a spot weld. Thus fluid (gas or liquid) pressure transmitted through the orifice will exert force against the flexible sheet where it will be substantially concentrated about said secured small area until a predetermined force level is reached that will tear the sheet about the secured small area, producing a permanent vent in the cell.

Galvanic cells may generate large quantities of gas under certain conditions during use. Since many such cells are required to be tightly sealed in order to prevent loss of electrolyte by leakage, high internal gas pressure may develop. Such pressure may cause leakage, bulging or possible rupture of the container of the cell under abusive conditions, if not properly vented.

In the past, several different types of pressure relief vent valves have been used for releasing high internal gas pressure from inside a sealed galvanic cell. Devices such as, for example, safety valves, rupture membranes, shearing plugs or sharp points which are forced through sheets have been employed. However, a problem with these devices is that it is difficult to combine low cost, precision in venting at a specific pressure, adequate sealing for the pressurized container, and a degree of strength against accid-

2.

ental or premature venting due to minor mechanical and/or electrical abuse of the cell. In addition, some of the prior art venting devices are not suitable for low pressure venting and may occupy excessive volume in the cell.

With the continuing development of portable electrically powered devices such as, for example, tape recorders and play-back machines, radio transmitters and receivers a new type of reliable, long service life cell or battery has been developed. These newly developed electrochemical cell systems provide a long service life by utilizing highly reactive anode materials such as, for example, lithium or sodium in conjunction with high energy density non-aqueous liquid cathode materials and a suitable salt.

It has recently been disclosed in the literature that certain materials are capable of acting both as an electrolyte carrier, i.e., as solvent for the electrolyte salt, and as the active cathode for a non-aqueous electrochemical cell. U.S. application Serial No. 439,521 by G.E. Blomgrenn et al filed February 4, 1974, which is a continuation-in-part of application Serial No. 212,582 filed on December 27, 1971, discloses a non-aqueous electrochemical cell comprising an anode, a cathode collector and a cathode-electrolyte, said cathode-electrolyte comprising a solution of an ionically conductive solute dissolved in an active cathode depolarizer wherein said active cathode depolarizer comprises a liquid oxyhalide of an element of Group V or Group VI of the Periodic Table. The "Periodic Table" is the Periodic Table of Elements as set forth on the inside back cover of the Handbook of Chemistry and Physics, 48th Edition, The Chemical Rubber Company Cleveland, Ohio, 1967-1968. Examples of such non-aqueous cathode materials are sulfuryl chloride, thionyl

3.

chloride, phosphorus oxychloride, thionyl bromide, chromyl chloride, vanadyl tribromide and selenium oxychloride.

Another class of liquid cathode materials would be the halides of an element of Group IV to Group VI of the Periodic Table. Examples of such non-aqueous cathode materials are sulfur monochloride, sulfur monobromide, selenium tetrafluoride, selenium monobromide, thiophosphoryl chloride, thiophosphoryl bromide, vanadium pentafluoride, lead tetrachloride, titanium tetrachloride, disulfur decafluoride, tin bromide trichloride, tin dibromide dichloride and tin tribromide chloride.

It has been found that when employing high energy density liquid cathode materials in non-aqueous cell systems, the cells exhibit higher voltage than cells employing convention aqueous systems which results in fewer cell units being required to operate a particular battery-powered device. In addition, many of the oxyhalide and halide non-aqueous cells display relatively flat discharge voltage-versus-time curves. Thus these cells can be employed to produce batteries that will provide a working voltage closer to a designated cut-off voltage than is practicable with some conventional aqueous systems which generally do not exhibit flat discharge voltage-versus-time curves.

However, one possible disadvantage in the use of oxyhalide and halide liquid cathode non-aqueous cells is that it may be possible that during storage or use, some of the oxyhalide, halide or their reaction products may escape from the cell. This escape of liquids and/or gases could cause damage to the device employing the cell or to the surface of a compartment or shelf where the cell is stored. On the other hand, if the seal of the cell is effectively permanently secured, then it is possible that the buildup to internal pressure within the cell could cause the

4.

container of the cell to rupture. To prevent rupture of the container of the cell from possible internal pressure buildup, it is thus necessary to vent the cell at some predetermined pressure. It has been reported that some oxyhalides such as thionyl chloride and sulfuryl chloride should be vented at pressures below about 500 psi and preferably between about 150 and 300 psi.

We have found that it is possible to provide a safety non-resealable vent closure for electrochemical cells, e.g. non-aqueous cells, specially oxyhalide cells, which is inexpensive to manufacture, easy to assemble, and compact and which comprises the peripheral sealing of a flexible sheet over a vent orifice in the cell's housing and then securing a small area of the sheet to the housing, as for example, by employing a small spot weld, thus providing a small area for stress concentration that can be made to tear or rupture under a predetermined level of gas pressure buildup from within the cell.

According to the prevent invention therefore an electrochemical cell is provided in which the active components of the cell are assembled within a housing comprising a container sealed at its open end by a cover and having at least one vent orifice in the housing, a flexible sheet disposed over the vent orifice and secured and sealed to the housing of the cell completely around the vent orifice and a selected area within the segment of the sheet secured to the cell housing is spaced from the vent orifice and is secured to the housing of the cell such that fluid (gas and/or liquid) pressure transmitted through the vent orifice from within the cell will exert force against the flexible sheet where it will be substantially concentrated about the secured area until a predetermined

5.

pressure level is reached that will tear the sheet about the secured area, producing a permanent vent in the cell.

Preferably the flexible sheet is a disc disposed and secured over an orifice positioned at the bottom of a cylindrical cell. The disc is more preferably the approximate size of the bottom of the cell. The sheet could be secured and hermetically sealed to the housing of the cell, for example, by welding, adhesive bonding, or using any other conventional technique as long as the sheet is sealed to the housing of the cell over the vent orifice. The small area of the flexible sheet to be secured to the housing of the cell is selected such that it will rupture under a predetermined pressure force exerted against the flexible sheet and concentrated about said small area. Preferably, a spot weld is used to provide a sufficient securement of the sheet to the housing which can then rupture or tear under a predetermined pressure level required for a particular application. By selecting the size of the area within the seal line, the thickness and material of the sheet, and the size (perimeter) and location of the spot weld, the cell can be made to vent at pressures as low as 75 psi. By increasing the area of the sheet within the seal line, the pressure required to rupture the sheet about a given spot weld would be decreased. For example, using a 0.475-inch diameter disc of stainless steel welded proximal its periphery to a container, a laser could produce a spot weld on the disc about 0.025 to 0.030 inch in diameter. A force of only about 20 to 25 pounds (based on the pressure exerted against the area within the seal line of the disc) on this small spot-welded area would be sufficient to reach the 100,000 to 150,000 psi tensile strength of stainless steel, which material

6.

could be used as the flexible sheet material.  It is evident that through the use of a flexible sheet spot welded to the container, a vent can be obtained that will function at a more predetermined and lower pressure level than if the pressure had to act on the securing and sealing weld of the sheet proximal its periphery.

In the preferred embodiment of the invention, a vent orifice is placed off-centre at the bottom of a cylindrical container of the cell and then a flexible disc the same size and diameter of the bottom of the container, is welded at is proximal periphery to the bottom of the container.  A small spot weld, measuring between about $0.3 \times 10^{-3}$ and about $0.4 \times 10^{-2}$ square inch, is then placed at the centre of the disc where it would be spaced apart from the vent orifice in the container.

The flexible sheet for use in this invention can be selected from materials such as, for example, stainless steel or nickel and can assume any configuration such as, for example, a circle, square, rectangle, triangle, or any polygonal contour.  As stated above, the thickness, size of the area within the seal line (perimeter), and the material of the flexible sheet, and the size of and location of the spot weld will determine the pressure range that will rupture the area around the spot weld to produce a permanent vent in the cell.  For oxyhalide cells employing thionyl chloride, the non-resealable safety vent closure of this invention can be made to vent at pressures of from about 150 to 300 psi.

The non-resealable safety vent closure of this invention can be employed with all size cells and is ideally suited for liquid cathode cell systems employing, for example, a liquid oxyhalide.  A cell for use in this invention can be the split internal anode/outer cathode

7.

collector construction as described in U.S. Patent No. 4,032,696 or the split internal cathode collector constructed as described in U.S. patent No,4,048,389, said U.S. Patents 4,032,696 and 4,048,389 being incorporated herein by reference.

Suitable non-aqueous liquid cathode materials for use in cells of this invention are one or more of the liquid oxyhalides of an element of Group V or Group VI of the Periodic Table and/or one or more of the halides of an element of Group IV to Group VI of the Periodic Table, said Periodic Table being the Periodic Table of Elements as set forth on the inside back cover of the Handbook of Chemistry and Physics, 48th Edition, The Chemical Rubber Co., Cleveland, Ohio, 1967-1968. Examples of such non-aqueous cathode materials are sulfuryl chloride, thionyl chloride, phosphorus oxychloride, thionyl bromide, chromyl chloride, vanadyl tribromide, selenium oxychloride, sulfur monochloride, sulfur monobromide, selenium tetrafluoride, selenium monobromide, thiophosphoryl chloride, thiophosphoryl bromide, vanadium pentafluoride, lead tetrachloride, titanium tetrachloride, disulfur decafluoride, tin bromide trichloride, tin dibromide dichloride and tin tribromide chloride. Another suitable cathode material is liquid sulfur dioxide.

Anodes suitable for use in non-aqueous liquid cathode cell systems can be generally consumable metals and include the alkali metals or alkaline earth metals and alloys of alkali metals or alkaline earth metals with each other and other metals. The term "alloy" as used herein is intended to include mixtures; solid solutions such as,for example, lithium-magnesium; and intermetallic compounds such as, for example, lithium monoaluminide. The preferred anode materials

8.

are the alkali metals and particularly lithium, sodium and potassium. When using lithium anodes the anode may be coated with a vinyl resin as disclosed in U.S. Patent 3,993,501, said patent incorporated herein by reference.

The cathode collector for use in liquid cathode cell systems has to be electronically conductive so as to permit external electrical contact to be made with the active cathode material and also provide extended area reaction sites for the cathodic electrochemical process of the cell. Materials suitable for use as a cathode collector are carbon materials and metals such as, for example, nickel, with acetylene black being preferable. In addition, the cathode collector when made of a particulate material should be capable of being moulded directly within a can or capable of being moulded into various size discrete bodies that can be handled without cracking or breaking. To impart a cohesive characteristic to some types of cathode collectors, such as carbonaceous cathode collectors, a suitable binder material, with or without plasticizers and with or without stabilizers, can be added to the cathode collector materials. Examples of suitable binder materials for this purpose are vinyl polymers, polyethylene, polypropylene, poly-acrylics and polystyrene. For example, polytetra-fluoroethylne is the preferred binder for cathode collectors for use with liquid oxyhalide cathodes. The binder, if required, should be added in an amount of from about 5% to about 30% by weight of the moulded cathode collector since an amount less than 5% would not provide sufficient strength to the moulded body while an amount larger than 30% would wetproof the surface of the carbon and/or reduce the available surface of the carbon, thereby reducing the activation site

9.

areas required for the cathodic electrochemical process of the cell. Preferably, the binder should be between 10% and 25% by weight of the cathode collector. Of importance in selecting the materials for the cathode collector is to select materials that will be chemically stable in the cell system in which they are to be used.

A solute for use in liquid cathode cell systems may be a simple or double salt which will produce an ionically conductive solution when dissolved in a suitable solvent. Preferred solutes for non-aqueous systems are complexes of inorganic or organic Lewis acids and inorganic ionizable salts. The only requirements for utility are that the salt, whether simple or complex, be compatible with the solvent being employed and that it yield a solution which is ionically conductive. According to the Lewis or electronic concept of acids and bases, many substances which contain no active hydrogen can act as acids or acceptors of electron doublets. The basic concept is set forth in the chemical literature (Journal of the Franklin Institute, Vol. 226, July/December, 1938, pages 293-313 by G.N. Lewis).

A suggested reaction mechanism for the manner in which these complexes function in a solvent is described in detail in U.S. Patent 3,542,602 wherein it is suggested that the complex or double salt formed between the Lewis acid and the ionizable salt yields an entity which is more stable than either of the components alone.

Typical Lewis acids suitable for use in conjunction with liquid oxyhalide cathodes are aluminium fluoride, aluminium bromide, aluminium chloride, antimony pentachloride, zirconium tetrachloride, phosphorus pentachloride, boron fluoride, boron chloride

10.

and boron bromide.

Ionizable salts useful in combination with the Lewis acids are lithium fluoride, lithium chloride, lithium bromide, lithium sulfide, sodium fluoride, sodium chloride, sodium bromide, potassium fluoride, potassium chloride and potassium bromide.

It will be obvious to those skilled in the art that the double salts formed by a Lewis acid and an ionizable salt may be used as such or the individual components may be added to the solvent separately to form the salt or the resulting ions in situ. One such double salt, for example, is that formed by the combination of aluminium chloride and lithium chloride to yield lithium aluminium tetrachloride.

If desired, and specifically for the halides, a co-solvent should be added to the liquid active reducible cathode and solute solution to alter the dielectric constant, viscosity or solvent properties of the solution to achieve better conductivity. Some examples of suitable co-solvents are nitrobenzene, tetrahydrofuran , 1,3-dioxolane, 3-methyl-2-oxazolidone, propylene carbonate, $\gamma$-butyrolactone, sulfolane, ethylene glycol sulfite, dimethyl sulfite, benzoyl chloride, dimethoxyethane, dimethyl isoxazole, diethyl carbonate and sulfur dioxide.

Separators for use with liquid cathodes in non-aqueous cells are the non-woven glass separators, preferably those separators that incorporate long glass fibres along with short glass fibres since such a combination increases the tear strength of the separators thereby making them easier to handle.

The container of the cell could be made, for example, of stainless steel, iron, nickel, plastic, coated metals or some other suitable material.

Some preferred combinations of non-aqueous cathode materials and anodes are as follows;

1) sulfuryl chloride/Li or Na;

2) thionyl chloride/Li or Na;

3) phosphorus oxychloride/Li or Na;

4) sulfur monochloride/Li or Na;

5) sulfur monobromide/Li or Na;

6) selenium tetrafluoride/Li or Na.

Preferably, the cells for use in this invention are liquid oxyhalide cells using sulfuryl chloride, thionyl chloride or mixtures thereof with a lithium anode.

It is to be understood that the safety vent closure of this invention could be used in other cell systems such as, for example, Leclanche dry cells, zinc chloride cells, lithium-$MnO_2$ cells, lithium-iron sulfide cells, alkaline-$MnO_2$ cells, nickel-cadmium cells, and lead-acid cells.

The present invention will become more apparent from the following description thereof when considered together with the accompanying drawing which is set forth as being exemplary of embodiments of the present invention and is not intended in any way to be limitative thereof and wherein.

Figure 1 is a perspective view of a flexible disc for use in this invention;

Figure 2 is a perspective view of a galvanic cell container shown inverted so that the bottom of the container of the cell is shown as the top with an off-centre vent orifice; and

Figure 3 is a perspective view of the galvanic cell container of Figure 2 with the disc shown in Figure 1 secured to the bottom of the cell container.

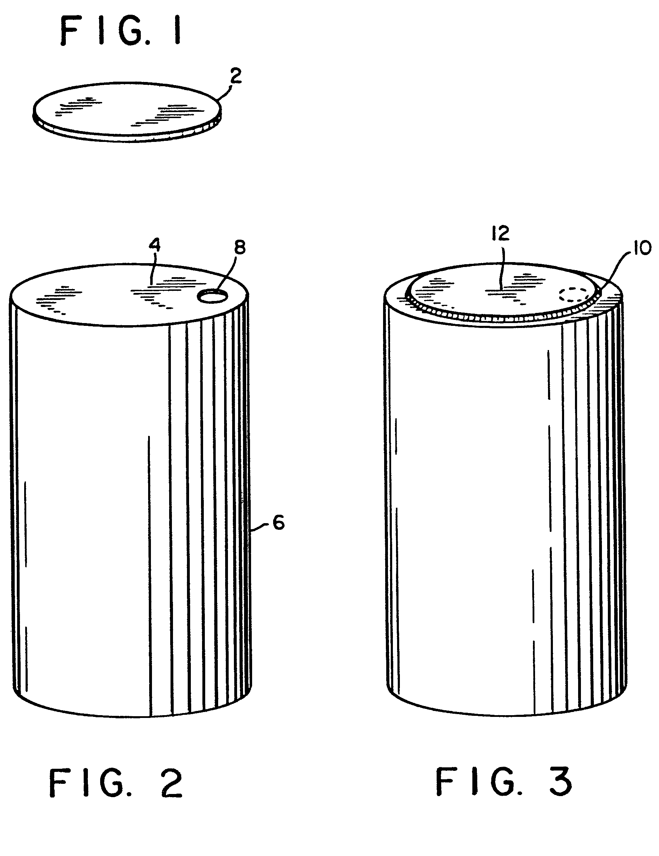

Referring in detail to Figures 1 to 3, a flexible disc 2, such as, for example, a stainless steel disc, is disposed and secured over the bottom 4 of a galvanic cell container 6, said bottom 4 having an off-centre vent orifice 8. Specifically, flexible disc 2 is secured proximal its peripheral edge 10 to the bottom 4 of cell container 6 using conventional welding means. A small spot weld 12, about 0.025 inch in diameter, is placed at the centre of disc 2, thereby securing a small central area of disc 2 to bottom 4 of cell container 6. Pressure buildup within cell container 6 will vent through orifice 8 and exert pressure against flexible disc 2 where it will be substantially concentrated around spot weld 12. A pressure buildup to as low as 75 psi can be sufficient to rupture the area around spot weld 12, thereby providing a permanent vent in the cell container.

## EXAMPLE

Empty stainless steel cell containers, 0.475-inch diameter and 1.6 inches high, were provided with a flexible disc of stainless steel (0.002 inch thick) as shown in Figures 1 to 3. The bottom of the container had an off-centre vent orifice over which the flexible disc was secured by welding the proximal periphery of the disc to the bottom of the container. A small spot weld (about 0.025 inch diameter) was placed at the centre of the disc securing the centre of the disc to the bottom of the container. Containers with the secured disc in which some had the centre spot weld were pressure-tested, and the data obtained are shown in the Table.

13.

TABLE

| Cell Sample | Without Centre Spot Weld | With Centre Spot Weld | Pressure (psi) at Which Venting Occurred |
|---|---|---|---|
| 1 | Yes | | 850 plus |
| 2 | Yes | | 850 plus |
| 3 | Yes | | * |
| 4 | Yes | | * |
| 5 | Yes | | 850 plus |
| 6 | Yes | | 850 plus |
| 7 | | Yes | * |
| 8 | | Yes | 540 |
| 9 | | Yes | 640 |
| 10 | | Yes | 550 |
| 11 | | Yes | 570 |
| 12 | | Yes | 580 |

* Leak observed at the peripheral or perimeter weld.

It is to be understood that although the present invention has been described with reference to many particular details thereof, it is not intended that these details shall be construed as limiting the scope of this invention.

14.

## CLAIMS.

1. An electrochemical cell in which the active components of the cell are assembled within a housing comprising a container sealed at its open end by a cover and having at least one vent orifice in the housing, a flexible sheet disposed over the vent orifice and secured and sealed to the housing of the cell completely around the vent orifice, and a selected area within the segment of the sheet secured to the housing of the cell is spaced from the vent orifice and is secured to the housing of the cell such that fluid pressure transmitted through the vent orifice from within the cell will exert force against the flexible sheet where it will be substantially concentrated about the secured area until a predetermined pressure level is reached that will tear the sheet about the secured area, producing a permanent vent in the cell.

2. An electrochemical cell according to claim 1 wherein the vent orifice is disposed in the bottom of the container and the flexible sheet is a flexible disc.

3. An electrochemical cell according to claim 2 wherein the disc is approximately the size of the bottom of the container.

4. An electrochemical cell according to claim 2 or 3 wherein the container is a cylindrical container, the vent orifice is disposed off-centre in the bottom of the container and the flexible disc is spot welded at the centre of the disc.

5. An electrochemical cell according to claim 1, 2, 3 or 4 wherein the perimeter of the secured area will rupture at pressures of from about 150 psi to about 300 psi.

6. An electrochemical cell according to any of claims 1 to 5 wherein the cell is a liquid oxyhalide cell.

FIG. 1

FIG. 2

FIG. 3

0068836

0068836
Application number

EUROPEAN SEARCH REPORT

European Patent
Office

EP    82 30 3316

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 380 964  (E.E.GROVER et al.) <br> *Figures 1,2,3,4; claim 1; page 1, right-hand column, line 47 - page 2, left-hand column, line 6; page 2, left-hand column, lines 31-42* | 1,2 | H 01 M    2/12 |
| | --- | | |
| A | US-A-3 909 303  (M.G.ROSANSKY et al.) <br> *Figures 1,2; column 2, lines 39-62; claims 1-2* | 1 | |
| | --- | | |
| A | FR-A-2 357 074  (P.R.MALLORY) <br><br> *Figure 2; claims 1,2,5,10; page 1, line 20 - page 2, line 5* & US - A - 4 115 629 | | |

TECHNICAL FIELDS SEARCHED (Int. Cl. ³)

| Category | Citation | Relevant | |
|---|---|---|---|
| | --- | | H 01 M    2/12 |
| A | US-A-3 524 112  (A.RUTTKAY et al.) <br> *Claim 1; figure 1* | | H 01 G    9/12 <br> H 01 G    1/11 |
| | ----- | | |

The present search report has been drawn up for all claims

| Place of search | Date of completion of the search | Examiner |
|---|---|---|
| THE HAGUE | 08-10-1982 | D'HONDT J.W. |